# EUROPEAN PATENT APPLICATION

(11) **EP 1 591 564 A2**
(43) Date of publication of application: **02.11.2005**
(21) Application number: 05006930.1
(22) Date of filing: 30.03.2005
(51) Int. Cl.: C25D 11/26

(54) **Anodizing electrolytes for high voltage capacitor anodes**

(30) Priority: 01.04.2004 US 816363
(71) Applicant: Wilson Greatbatch Technologies, Inc., Clarence, New York 14031 (US)
(72) Inventor: Liu, Yanming, New York 14032 (US); Scheuer, Christina, Amherst, New York 14228 (US)
(74) Representative: Koepe, Gerd L.

(57) **Abstract**

The present invention is a low temperature (below about 60°C.) anodizing electrolyte composition for valve metals including, and not limited to, aluminum, niobium, titanium, tantalum, zirconium, and alloys thereof. The low temperature anodizing electrolyte composition contains at least: (1) a protic solvent selected from the group consisting of alkylene glycols, polyalkylene glycols, and their mono ethers, and (2) a weak inorganic or organic acid or its salt. The present invention is capable of anodizing valve metals for high voltage capacitors of greater than 300 Volts with: (1) little to no gray-out at high formation voltage, (2) high formation breakdown voltage, and (3) high quality of oxide with low DC leakage and stable long term performance of the anode.

## Description

### BACKGROUND OF THE INVENTION

### 1. Field of the Invention

The invention relates to a low temperature-anodizing electrolyte and to an electrochemical process for anodizing valve metals with that electrolyte.

### 2. Prior Art

Electrolytic capacitors contain anodes that are valve metal coated with its corresponding oxide (the dielectric) by anodizing. The anodizing electrolyte composition and the process (the protocol) of forming the anodes are crucial for the electrical properties and performance of the anodes or the capacitors, especially for high voltage capacitors.

Anodizing electrolyte compositions have long been used to anodize valve metals for use in electrolytic capacitors. Melody et al. disclose, in U.S. Patent No. 5,716,511 at col. 1, lines 49-60, one such 1950 brand of anodizing electrolyte composition. In particular, Melody et al. wrote, "After post-sintering separation and attachment to carrier strips or bars, the anodes are suspended in an electrolyte solution and anodized under appropriate current density to produce the anodic oxide dielectric. The anodizing step may be carried out at a temperature up to about 95°C in an electrolyte which typically consists of a . . . mixed aqueous/ethylene glycol solution of a . . . salt of a mineral acid such as phosphoric . . . acid. Electrolytes which tend to give the best results (i.e. highest dielectric quality) often contain 50-60 [volume percent of] ethylene glycol or polyethylene glycol and 0.5 to 2 or more [volume percent of] phosphoric acid and are maintained at a temperature between 80° and 90°C."

Melody et al. further wrote, "The organic solvents traditionally used to anodize [valve] metal anodes, ethylene glycol and polyethylene glycols, . . . tend to have serious disadvantages. [Some of these disadvantages include and are not limited to] ethylene glycol is toxic, . . . [and] glycols and polyglycols tend to be viscous at lower temperatures." (See col. 3, lines 44-50; bracketed material added for clarity.)

Viscosity is a critical feature of Melody et al.'s anodizing electrolyte composition in U.S. Patent No. 5,716,511. It is critical because Melody et al. in the '511 patent want to lower the temperature of the electrolyte composition during the anodization process. By lowering the temperature below 50°C, Melody et al. claim there is less chance to create flaws on the anodized valve metal. Melody et al., however, report that only using organic solvents that have a low viscosity can accomplish anodizing at such low temperatures.

In the '511 patent, Melody et al. only disclose that polyethylene glycol dimethyl ethers having from 4 to 10 repeating ethylene groups (generically referred to as "polyglycol di-ethers") are acceptable low viscosity solvents for anodizing electrolyte compositions. To confirm this, Melody et al. reported that polyethylene glycol dimethyl ethers have a viscosity at cps at 20°C of 4.1 and ethylene glycol and polyethylene glycol 300 have viscosities of 20.9 and 75, respectively. Melody et al. asserted that the viscosity values of glycols, polyglycols, and higher alkyl ethers of the polyethylene glycols, such as diethyl, dipropyl or dibutyl ethers were unacceptable for use with anodizing electrolyte solutions at temperatures below 50°C. In particular, Melody et al. stated that (1) glycols and polyglycols become too viscous at such low temperatures, and (2) polyethylene glycol higher dialkyl ethers, such as diethyl, dipropyl or dibutyl ethers do not provide the requisite solubility and low viscosity. (See col. 3, line 44 to col. 4, line 2, and col. 4, lines 62 to 66.)

In view of these negative teachings of using organic solvents other than polyethylene glycol dimethyl ether for anodizing electrolyte compositions, Melody et al. compared anodizing electrolyte compositions being maintained between 80°C and 90°C. and having different organic solvents. The results were as follow:

| Organic Solvent | Breakdown Voltage |
|---|---|
| Ethylene glycol | 240 Volts |
| Polyethylene glycol 300 | 260 Volts |
| Methoxypolyethylene glycol 350 | 285 Volts |
| Tetraethylene glycol dimethyl ether | 500 Volts |

Clearly, Melody et al. in U.S. Patent No. 5,716,511 teach that only polyethylene glycol dimethyl ether having from 4 to 10 repeating ethylene groups can be used as anodizing electrolyte compositions at temperatures below 50°C to obtain desired anodization results of breakdown voltages exceeding 300 Volts.

In U.S. Patent No. 6,261,434 (application filing date is post-issuance of U.S. Patent No. 5,716,511) Melody et al. discloses another method for anodizing valve metals. In this patent, Melody et al. set forth that "[t]he electrolyte temperature is known to those skilled and is typically from about 80°C. to about 90°C." (col. 6, lines 29-30). They then revert to using a modified anodizing electrolyte solution and simultaneously a conventional anodizing electrolyte solution of ethylene glycol and phosphoric acid. In other words, it appears that in a later filed patent application Melody et al. are teaching away from using anodizing electrolyte solutions at temperatures below 50°C.

Returning to U.S. Patent No. 5,716,511, Melody et al. also teach that the organic solvent of polyethylene glycol dimethyl ether having from 4 to 10 repeating ethylene groups in the anodizing electrolyte can range from 10 to 75 volume percent. In the examples, however, the organic solvent's volume percentage is never over 60. This value is interesting because Melody et al. confirms (col. 1, lines 56-58) that to obtain the best results (i.e. highest dielectric quality) for an anodizing electrolyte solution, the organic solvent should range from 50 to 60 volume percent - which his best examples follow. In other words, Melody et al. clearly teach away from increasing the volume percentage of the organic solvent in an anodizing electrolyte solution to exceed 60 volume percent.

The "gray-out" on an anode is a well-known phenomenon observed in anodizing tantalum, especially for high voltage anodizing. It is a result of the formation of crystalline tantalum oxide having high DC leakage, and is undesirable. Electrolyte composition and formation protocol are crucial in preventing the "gray-out".

Anodizing breakdown voltage and the quality of the anodic oxide depend on the electrolyte conductivity, which, in turn, is a function of the solvent composition and the solute concentration. Normally, increasing the electrolyte conductivity decreases the anodizing breakdown voltage. The electrolyte must have a breakdown voltage well above the intended anodizing voltage. On the other hand, too low an electrolyte conductivity results in excessive heating of the electrolyte and the anode pellet that would cause "gray-out", breakdown, or poor quality of the oxide. The low conductivity electrolyte also causes high voltage drop and renders the anodizing impractical. Suitable electrolyte conductivity is required to have sufficient breakdown voltage while still allowing formation of a high quality oxide.

These problems are solved by the present invention.

### BRIEF DESCRIPTION OF THE FIGURES

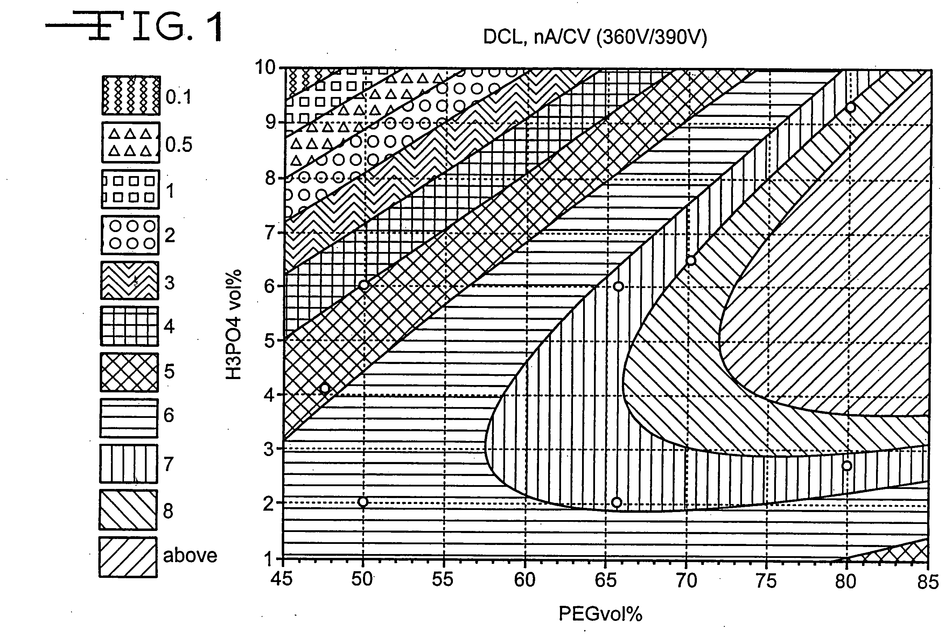

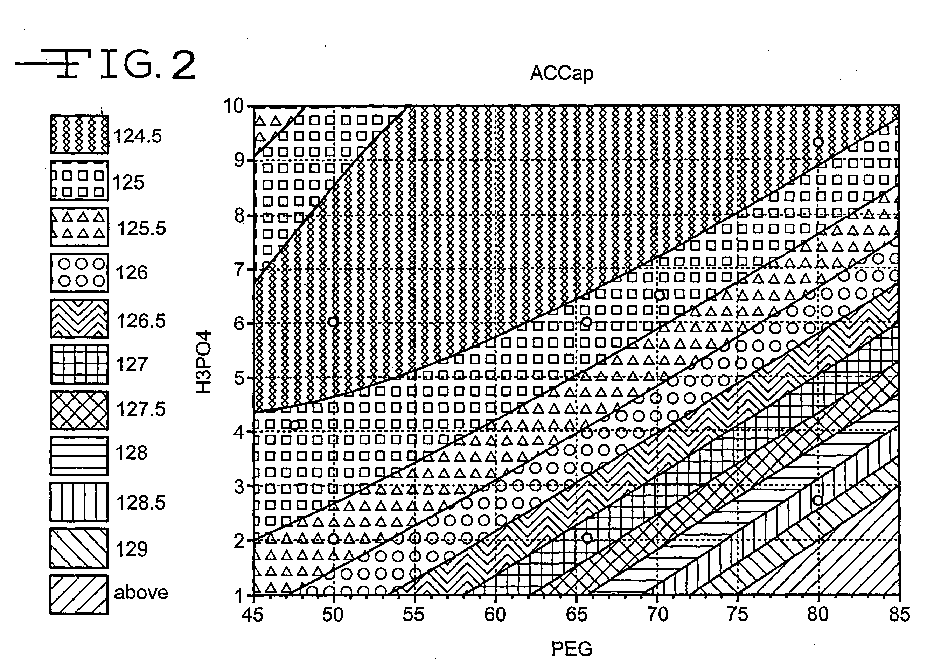

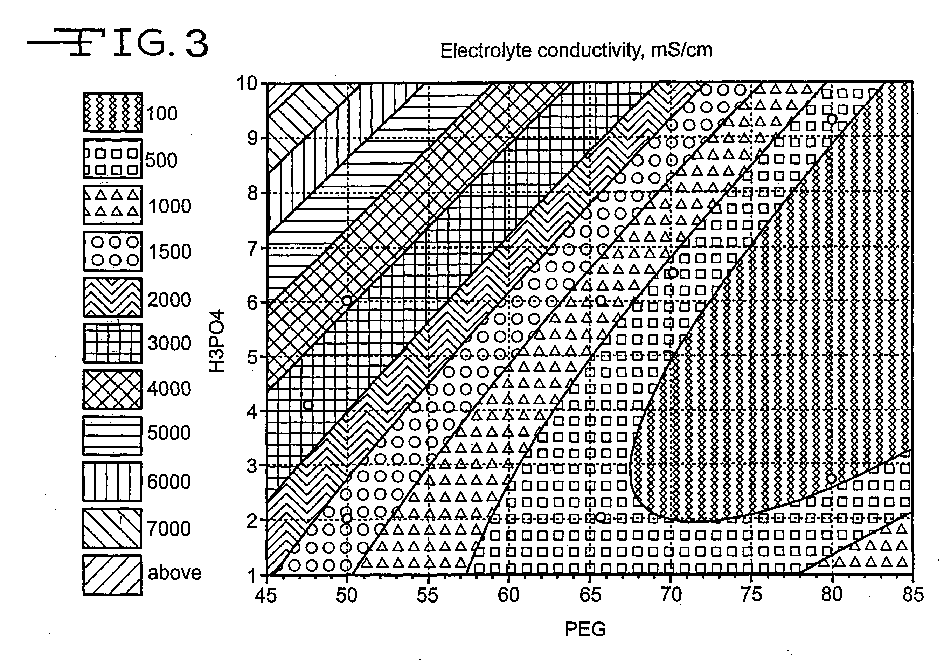

Figs. 1 to 3 illustrate the anode electrical properties (DCL in nA/CV, AC Capacitance) and electrolyte conductivity (mS/cm) of the present invention.

### SUMMARY OF THE INVENTION

The present invention is a low temperature (below around 60°C.) electrolyte composition for anodizing valve metals including, and not limited to, tantalum, aluminum, niobium, titanium, zirconium, hafnium, and alloys thereof. The low temperature anodizing electrolyte composition contains at least: (1) a protic solvent selected from the group consisting of alkylene glycols, polyalkylene glycols, and their mono ethers and (2) a weak inorganic or organic acid or its salt.

The electrolyte of the present invention is capable of anodizing valve metals for high voltage capacitors of greater than 300 Volts with: (1) little to no gray-out at high formation voltage, (2) high formation breakdown voltage, and (3) high quality of oxide with low DC leakage and stable long term performance of the anode.

### DETAILED DESCRIPTION OF THE PRESENT INVENTION

The present invention is directed to an electrolyte for anodizing valve metals, particularly for use in high voltage electrolytic capacitors. The valve metals are anodized in this electrolyte at temperatures below sixty degrees Celsius. Such an electrolyte allows for the anodizing of valve metals with little gray-out at high voltages and minimal breakdown. The resulting high quality oxide has low DC leakage and provides stable long-term anode performance.

Valve metals include, and are not limited to, tantalum, aluminum, niobium, titanium, zirconium, hafnium, and alloys thereof. When such valve metals are used as an anode in an electrolytic capacitor, they can be in the form of foil (etched or unetched), pressed and sintered powder pellet or other porous structures. For tantalum electrolyte capacitor, the tantalum anodes are typically in the form of a pressed/sintered tantalum powder pellet. Beam melt, sodium reduction, or other processes produce the tantalum powders. This invention is particularly useful for anodizing sintered powder pellets at high voltage.

Regardless of the process by which the valve metal powder is processed, pressed valve metal powder structures, and particularly tantalum pellets, are anodized in formation electrolytes. The present invention electrolyte comprises:
A. Up to about 90 volume percentage, preferably about 60 to about 85 volume percentage, of a protic solvent selected from the group consisting of alkylene glycols (examples include and are not limited to ethylene glycol; diethylene glycol; triethylene glycol; tetraethylene glycol; propylene glycol; trimethylene glycol; dipropylene glycol; glycerol; 2-methyl-1,3-propanediol; 1,4-butanediol; 2,3-butanediol; 2,2-dimethyl-1,3-propanediol; 2,4-pentanediol; 2,5-hexanediol; and combinations thereof), polyalkylene glycols (examples include and are not limited to polyethylene glycols; polypropylene glycols; polyethylenepropylene glycol copolymers; and combinations thereof), and alkylene or polyalkylene glycol monoethers (examples include and are not limited to ethylene glycol methyl ether; ethylene glycol ethyl ether; ethylene glycol butyl ether; diethylene glycol ethyl ether; diethylene glycol methyl ether; diethylene glycol butyl ether; dipropylene glycol methyl ether; tripropylene glycol methyl ether; and combinations thereof) and preferably having a molecular weight of less than 1000;
B. Up to about 15 volume percentage, preferably about 1 to about 10 volume or weight percentage, of a weak organic or inorganic acid or its salt thereof, examples include and are not limited to phosphoric acid, ammonium dihydrogen phosphate, boric acid, ammonium borate, acetic acid, ammonium acetate, other organic acids or their salts, and combinations thereof;
C. Water; and
D. Maintained at a temperature about 60°C and below.

Such an electrolyte has a conductivity of about 0.05 mS/cm to about 10 mS/cm at 40°C., preferably O.lmS/cm to about 5 mS/cm. Specific examples with different electrolyte compositions are recorded in Table 1, and Figs. 1-3.

The formation protocol for this process is disclosed in U.S. Patent No. 6,231,993 to Stephenson et al., which is (a) commonly assigned to the present assignee and (b) hereby incorporated by reference in its entirety. After the formation process, the anode is exposed to conventional heat treatment and reformation procedures. Both of these procedures are well known to those of ordinary skill in the capacitor art.

Concentrations shown in Table 1 (Tables 1A to 1C are portions of Table 1 separated by volume percentages of the weak acids for comparison purposes) are volume percentage. These tables clearly illustrate that the present invention, especially in the preferred embodiments, is capable of anodizing valve metals for high voltage capacitors of greater than 300 Volts with:
1) Little to no gray-out at high formation voltage,
2) Prevented or reduced breakdown failure, and
3) High quality of oxide with low DC leakage and stable long-term performance of the anode.

**Table 1**

| Anode Properties As A Function Of Electrolyte Composition | | | | |
|---|---|---|---|---|
| PEG 400 | H₃PO₄ | Conductivity mS/cm @ 40°C. | 5min DCL nA/CV @ 360V | 120 Hz Capacitance |
| 47.6 | 4.1 | 2.550 | 2.068 | 124 |
| 50 | 2 | 1.150 | 1.433 | 125.8 |
| 50 | 6 | 2.990 | 3.018 | 124.4 |
| 50 | 10 | 6.050 | Breakdown @ 330V during formation | |
| 65.7 | 2 | 0.237 | 0.920 | 126.2 |
| 65.7 | 6 | 0.772 | 0.639 | 125.7 |
| 65.7 | 6 | 0.772 | 0.911 | 125.0 |
| 65.7 | 10 | 1.523 | Breakdown @ 375V during formation | |
| 70.1 | 6.5 | 0.260 | 0.610 | 123.6 |
| 80 | 2.7 | 0.046 | 0.634 | 128.6 |
| 80 | 9.3 | 0.276 | 0.391 | 124.4 |
| 80 | 9.3 | 0.207 | 0.481 | 124.3 |

**Table 1A**

| Phosphoric Acid Being Below 3 Volume Percent Of The Electrolyte | | | | |
|---|---|---|---|---|
| PEG 400 | H₃PO₄ | Conductivity mS/cm @ 40°C. | 5 min DCL nA/CV @ 360V | 120 Hz Capacitance |
| 47.6 | 4.1 | 2.550 | 2.068 | 124 |
| 50 | 2 | 1.150 | 1.433 | 125.8 |
| 65.7 | 2 | 0.237 | 0.920 | 126.2 |
| 80 | 2.7 | 0.046 | 0.634 | 128.6 |

**Table 1B**

| Phosphoric Acid Being Around 5 to 7 Volume Percent Of The Electrolyte | | | | |
|---|---|---|---|---|
| PEG 400 | H₃PO₄ | Conductivity mS/cm @ 40°C. | 5 min DCL nA/CV @ 360V | 120 Hz Capacitance |
| 50 | 6 | 2.990 | 3.018 | 124.4 |
| 65.7 | 6 | 0.772 | 0.639 | 125.7 |
| 65.7 | 6 | 0.772 | 0.911 | 125.0 |
| 70.1 | 6.5 | 0.260 | 0.610 | 123.6 |

**Table 1C**

| Phosphoric Acid Being Above 7 And Below 10 Volume Percent Of The Electrolyte | | | | |
|---|---|---|---|---|
| PEG 400 | H₃PO₄ | Conductivity mS/cm @ 40°C. | 5 min DCL nA/CV @ 360V | 120 Hz Capacitance |
| 50 | 10 | 6.050 | Breakdown @ 330V during formation | |
| 65.7 | 10 | 1.523 | Breakdown @ 375V during formation | |
| 80 | 9.3 | 0.276 | 0.391 | 124.4 |
| 80 | 9.3 | 0.207 | 0.481 | 124.3 |

The information presented in Table 1 (and highlighted in Tables 1A-C) confirms that a suitable ratio of solvent and solute is needed to obtain low DC leakage (nA/CV) and prevent breakdown during formation. A low conductivity results from a higher ratio of solvent and solute.

Figs. 1 to 3 show contour plots for DC leakage in nA/CV, AC capacitance, and electrolyte conductivity (mS/cm), respectively, for the present electrolyte. These figures provide further support that the present invention is a superior anodizing electrolyte in comparison to that currently known. Fig. 1 shows that a higher particular protic solvent concentration gives lower DC leakage. Decreasing certain protic solvent content increases DC leakage and causes breakdown (see Table 1) and gray-out. Figs. 1 to 3 show that increasing protic solvent decreases electrolyte conductivity and slightly increases AC capacitance.

Conventional practice has been to form the valve metal to a target formation voltage at a constant current or varied current, with or without rest steps. The formation protocol and the current used depend on the electrolyte, the valve metal powder type and the size of the valve metal structure. Adjusting these parameters according to conventional practice is well within the knowledge of those skilled in the art.

The present invention is an improved electrolyte and thus process for providing an anodic dielectric coating on a valve metal structure. The present invention is directed to a high solvent content anodizing electrolyte and method of anodizing at a low temperature. The combination of this electrolyte composition and low temperature anodizing allows anodizing valve metals for high voltage capacitors of greater than 300 Volts with little to no gray-out at high anodizing voltage, reduced failure during anodizing and high quality of oxide with low DC leakage and stable long term performance of the anode.

This electrolyte composition is capable of anodizing valve metals for high voltage capacitors of greater than 300 Volts with the following characteristics:
1) Little to no gray-out at high formation voltage,
2) Diminished to no breakdown, and
3) High quality of oxide with low DC leakage and stable long-term performance of the anode.

It is appreciated that various modifications to the present inventive concepts described herein may be apparent to those of ordinary skill in the art without departing from the spirit and scope of the present invention as defined by the herein appended claims.

## Claims

1. A low temperature anodizing electrolyte for anodizing a valve metal or an alloy thereof, comprising:
a) a protic solvent selected from the group consisting of alkylene glycols, polyalkylene glycols, alkylene or polyalkylene glycol mono ethers, and combinations thereof; and
b) a weak inorganic or organic acid, or its salt;
c) wherein the protic solvent and the weak inorganic or organic acid, or its salt, are at a predetermined ratio of volume or weight percentage of the electrolyte; and
d) wherein the electrolyte is used at a low temperature for anodizing valve metals that results in little to no gray-out.

2. The electrolyte of claim 1, wherein the low temperature is about 60°C and below.

3. The electrolyte of claim 1 or claim 2, wherein the weak inorganic or organic acid or its salt is selected from the group consisting of phosphoric acid, ammonium dihydrogen phosphate, boric acid, ammonium borate, acetic acid, ammonium acetate, other organic acids or their salts, and combinations thereof.

4. The electrolyte of any of claims 1 to 3, wherein the alkylene glycols are selected from the group consisting of ethylene glycol, diethylene glycol, triethylene glycol, tetraethylene glycol, propylene glycol, trimethylene glycol, dipropylene glycol, glycerol, 2-methyl-1,3-propanediol, 1,4-butanediol, 2,3-butanediol, 2,2-dimethyl-1,3-propanediol, 2,4-pentanediol, 2,5-hexanediol, and combinations thereof; the polyalkylene glycols are selected from the group con-sisting of polyethylene glycols, polypropylene glycols, polyethylenepropylene glycol copolymers, and combinations thereof; the alkylene or polyalkylene glycol mono ethers are selected from the group consisting of ethylene glycol methyl ether, ethylene glycol ethyl ether, ethylene glycol butyl ether, diethylene glycol ethyl ether, diethylene glycol methyl ether, diethylene glycol butyl ether, dipropylene glycol methyl ether, tripropylene glycol methyl ether, and combinations thereof.

5. The electrolyte of claim 1, wherein the protic solvent is up to about 90 volume percentage of the electrolyte, preferably wherein the protic solvent ranges from about 60 to about 85 volume percentage of the electrolyte; and/or wherein the protic solvent has a molecular weight of less than about 1000.

6. The electrolyte of any of claims 1 to 5, wherein the weak inorganic or organic acid, or its salt, is up to about 15 volume or weight percentage of the electrolyte, preferably wherein the weak inorganic or organic acid, or its salt, ranges from about 1 to about 10 volume or weight percentage of the electrolyte.

7. A low temperature-anodizing electrolyte for anodizing a valve metal or an alloy thereof, comprising:
a) a protic solvent selected from the group consisting of alkylene glycols, polyalkylene glycols, alkylene or polyalkylene glycol mono ethers, and combinations thereof and having a molecular weight of less than about 1000;
b) a weak inorganic or organic acid or its salt; and
c) the low temperature is below about 60°C;
d) wherein the protic solvent and the weak inorganic or organic acid or its salt are at a predetermined ratio of volume or weight percentage of the electrolyte; and
e) wherein the electrolyte is used at a low temperature for anodizing valve metals that results in little to no gray-out.

8. The electrolyte of claim 7, wherein the weak inorganic or organic acid, or its salt, is selected from the group consisting of phosphoric acid, ammonium dihydrogen phosphate, boric acid, ammonium borate, acetic acid, ammonium acetate, other organic acids or their salts, and combinations thereof; and/or wherein the weak inorganic or organic acid or its salt ranges from about 1 to about 10 volume or weight percentage of the electrolyte.

9. The electrolyte of claim 7 or claim 8, wherein the alkylene glycols are selected from the group consisting of ethylene glycol, diethylene glycol, triethylene glycol, tetraethylene glycol, propylene glycol, trimethylene glycol, dipropylene glycol, glycerol, 2-methyl-1,3-propanediol, 1,4-butanediol, 2,3-butanediol, 2,2-dimethyl-1,3-propanediol, 2,4-pentanediol, 2,5-hexanediol, and combinations thereof; the polyalkylene glycols are selected from the group con-sisting of polyethylene glycols, polypropylene glycols, polyethylenepropylene glycol copolymers, and combinations thereof; the alkylene or polyalkylene glycol mono ethers are selected from the group consisting of ethylene glycol methyl ether, ethylene glycol ethyl ether, ethylene glycol butyl ether, diethylene glycol ethyl ether, diethylene glycol methyl ether, diethylene glycol butyl ether, dipropylene glycol methyl ether, tripropylene glycol methyl ether, and combinations thereof.

10. The electrolyte of any of claims 7 to 9, wherein the protic solvent ranges from about 60 to about 85 volume percentage of the electrolyte.

11. A process for anodizing a valve metal or an alloy thereof comprising conducting the anodization at a temperature around and below 60°C in an electrolyte, comprising the steps of:
a) combining a protic solvent selected from the group consisting of alkylene glycols, polyalkylene glycols, alkylene or polyalkylene glycol mono ethers and combinations thereof and having a molecular weight of less than about 1000; and
b) a weak inorganic or organic acid or its salt;
c) wherein the protic solvent and the weak inorganic or organic acid or its salt are used at a predetermined ratio of volume or weight percentage of the electrolyte; and
d) wherein the electrolyte is used at a low temperature for anodizing valve metals that results in little to no gray-out.

12. The process of claim 11, wherein the weak inorganic or organic acid, or its salt, is selected from the group consisting of phosphoric acid, ammonium dihydrogen phosphate, boric acid, ammonium borate, acetic acid, ammonium acetate, other organic acids or their salts, and combinations thereof; and/or wherein the weak inorganic or organic acid or its salt ranges from about 1 to about 10 volume or weight percentage of the electrolyte.

13. The process of claim 11 or claim 12, wherein the alkylene glycols are selected from the group consisting of ethylene glycol, diethylene glycol, triethylene glycol, tetraethylene glycol, propylene glycol, trimethylene glycol, dipropylene glycol, glycerol, 2-methyl-1,3-propanediol, 1,4-butanediol, 2,3-butanediol, 2,2-dimethyl-1,3-propanediol, 2,4-pentanediol, 2,5-hexanediol, and combinations thereof; the polyalkylene glycols are selected from the group consisting of polyethylene glycols, polypropylene glycols, polyethylenepropylene glycol copolymers, and combinations thereof; the alkylene or polyalkylene glycol mono ethers are selected from the group consisting of ethylene glycol methyl ether, ethylene glycol ethyl ether, ethylene glycol butyl ether, diethylene glycol ethyl ether, diethylene glycol methyl ether, diethylene glycol butyl ether, dipropylene glycol methyl ether, tripropylene glycol methyl ether, and combinations thereof.

14. The process of any of claims 11 to 13, wherein the protic solvent ranges from about 60 to about 85 volume percentage of the electrolyte.
